# EUROPEAN PATENT APPLICATION

(11) **EP 4 628 554 A1**
(43) Date of publication of application: **08.10.2025**
(21) Application number: 23897383.8
(22) Date of filing: 06.11.2023
(51) Int. Cl.: C09D 11/30, B41J 2/01, B41M 5/00, C09D 11/326

(54) **AQUEOUS INKJET INK**

(30) Priority: 30.11.2022 JP 2022191588
(71) Applicant: Sakata INX Corp., Osaka-shi, Osaka 550-0002 (JP)
(72) Inventor: MAEDA, Hirohito, Osaka-shi, Osaka 550-0002 (JP); MORIYASU, Kazuki, Osaka-shi, Osaka 550-0002 (JP); UEDA, Eri, Osaka-shi, Osaka 550-0002 (JP); SANO, Takaaki, Osaka-shi, Osaka 550-0002 (JP)
(74) Representative: Cabinet Beau de Loménie
(86) International application number: PCT/JP2023/039838
(87) International publication number: WO 2024/116729

(57) **Abstract**

The present invention aims to provide an aqueous inkjet ink The present invention can provide an aqueous inkjet ink excellent in ejection performance and continuous ejection stability and capable of forming a coating excellent in abrasion resistance. The present invention relates to an aqueous inkjet ink containing: a pigment; fine resin particles; a surfactant; and water, the fine resin particles being contained in an amount of 0.5 to 10% by mass in solid content based on a total mass of the aqueous inkjet ink, the aqueous inkjet ink containing, as the surfactant, a surfactant represented by the following formula (I) in an amount of 0.01 to 1% by mass based on the total mass of the aqueous inkjet ink: 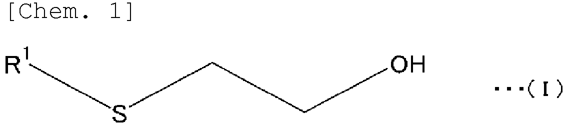 wherein R¹ is a C1-C15 linear or branched substituent containing at least one of a hydroxy group or an ether structure.

## Description

### TECHNICAL FIELD

The present invention relates to aqueous inkjet inks.

### BACKGROUND ART

Aqueous inkjet inks are used in a wide range of fields because they are highly safe and have a low environmental impact.

For example, Patent Literature 1 discloses an aqueous inkjet ink containing at least water (A), a coloring material (B), a water-soluble organic solvent component (C), a surfactant (D), and fine resin particles (E), wherein the aqueous inkjet ink further contains a water-soluble carbodiimide compound (F) as a crosslinking component, the surfactant (D) is a silicone-based surfactant, the fine resin particles (E) have a functional group that reacts with a carbodiimide group at least on a surface thereof, and a mass ratio (E)/(F) of the fine resin particles (E) to the water-soluble carbodiimide compound (F) is 10 or greater.

### CITATION LIST

### - Patent Literature

Patent Literature 1: JP 2018-070827 A

### SUMMARY OF INVENTION

### - Technical Problem

According to Patent Literature 1, use of specific fine resin particles and a silicone-based surfactant reduces or prevents rubbing off of the ink coating (fading) due to friction (abrasion resistance).

However, conventional aqueous inkjet inks often exhibit insufficient ejection performance, leading to degradation in print quality such as streaks especially during continuous printing (poor continuous ejection stability), which leaves room for further improvement in achievement of both ejection performance and abrasion resistance.

The present invention aims to provide an aqueous inkjet ink excellent in ejection performance and continuous ejection stability and capable of forming a coating excellent in abrasion resistance.

The present inventors have found out that in an aqueous inkjet ink containing a pigment, fine resin particles, a surfactant, and water, adjusting the amount of the fine resin particles within a specific range and using a particular surfactant can resolve all of the aforementioned problems. Thus, the present invention was completed.

In other words, the present invention relates to an aqueous inkjet ink containing: a pigment; fine resin particles; a surfactant; and water, the fine resin particles being contained in an amount of 0.5 to 10% by mass in solid content based on a total mass of the aqueous inkjet ink, the aqueous inkjet ink containing, as the surfactant, a surfactant represented by the following formula (I) in an amount of 0.01 to 1% by mass based on the total mass of the aqueous inkjet ink: 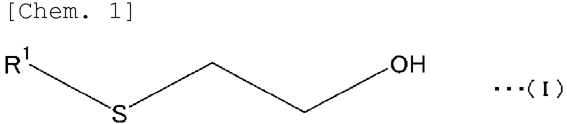 wherein R¹ is a C1-C15 linear or branched substituent containing at least one of a hydroxy group or an ether structure.

In the aqueous inkjet ink of the present invention, R¹ in the formula (I) preferably contains a hydroxy group.

In the formula (I), R¹ preferably contains a hydroxy group and an ether structure.

In the formula (I), R¹ preferably contains 2 to 11 carbon atoms.

The aqueous inkjet ink preferably further contains at least one of a nonionic surfactant or an anionic surfactant as the surfactant.

The amount of the surfactant represented by the formula (I) is preferably 0.1 to 0.5% by mass based on the total mass of the aqueous inkjet ink.

The fine resin particles preferably include at least one selected from the group consisting of a polyethylene resin, an acrylic resin, a styrene-acrylic copolymer resin, a vinyl acetate-acrylic copolymer resin, a vinyl chloride-acrylic copolymer resin, a vinyl acetate resin, a polyester urethane resin, a polyether polyurethane resin, a polycarbonate urethane resin, and a polyester resin.

The amount of the fine resin particles is preferably 1 to 5% by mass in solid content based on the total mass of the aqueous inkjet ink.

### - Advantageous Effects of Invention

The present invention can provide an aqueous inkjet ink excellent in ejection performance and continuous ejection stability and capable of forming a coating excellent in abrasion resistance.

### DESCRIPTION OF EMBODIMENTS

The aqueous inkjet ink of the present invention contains a pigment, fine resin particles, a surfactant, and water. The fine resin particles are contained in an amount of 0.5 to 10% by mass in solid content based on the total mass of the aqueous inkjet ink. The aqueous inkjet ink contains, as the surfactant, a surfactant represented by the following formula (I) in an amount of 0.01 to 1% by mass based on the total mass of the aqueous inkjet ink: 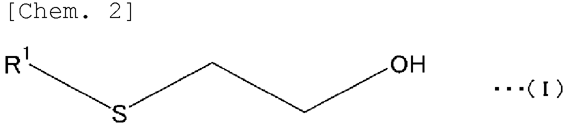 wherein R¹ is a C1-C15 linear or branched substituent containing at least one of a hydroxy group or an ether structure.

In the present invention, the incorporation of 0.5 to 10% by mass of fine resin particles achieves improved abrasion resistance of the ink coating. Normally, the incorporation of fine resin particles tends to deteriorate the ejection performance and continuous ejection stability in inkjet printing. However, the addition of a surfactant represented by the formula (I) improves the refillability (resupply performance) of the aqueous inkjet ink in the flow path, leading to improvement in ejection performance and continuous ejection stability of the aqueous inkjet ink containing a certain amount of fine resin particles.

However, the present invention should not be construed as being limited to the above mechanism.

### (Pigment)

The aqueous inkjet ink of the present invention contains a pigment.

Any known pigment may be appropriately selected as the pigment.

Examples of organic pigments include azo pigments (e.g., azo lakes, insoluble azo pigments, condensed azo pigments, chelate azo pigments), polycyclic pigments (e.g., phthalocyanine pigments, perylene pigments, perinone pigments, anthraquinone pigments, quinacridone pigments, dioxazine pigments, indigo pigments, thioindigo pigments, isoindolinone pigments, quinophthalone pigments), dye chelates (e.g., basic dye chelates, acid dye chelates), nitro pigments, nitroso pigments, and aniline black.

Examples of inorganic pigments include titanium oxide, zinc oxide, zinc sulfide, white lead, calcium carbonate, precipitated barium sulfate, white carbon, alumina white, kaolin clay, talc, bentonite, black iron oxide, cadmium red, red iron oxide, molybdenum red, molybdate orange, chrome vermilion, yellow lead, cadmium yellow, yellow iron oxide, titan yellow, chromium oxide, viridian, titanium cobalt green, cobalt green, cobalt chrome green, Victoria green, ultramarine, Prussian blue, cobalt blue, cerulean blue, cobalt silica blue, cobalt zinc silicate blue, manganese violet, and cobalt violet.

The amount of the pigment is preferably 1 to 20% by mass, more preferably 3 to 10% by mass in solid content based on the total mass of the aqueous inkjet ink.

### (Fine resin particles)

The aqueous inkjet ink of the present invention contains fine resin particles.

Examples of the fine resin particles include fine resin particles of a polyethylene resin, a polypropylene resin, a urethane resin, an acrylic resin, a styrene resin, a styrene-acrylic copolymer resin, a polybutadiene resin, a styrene-butadiene copolymer resin, a vinyl acetate resin, a vinyl acetate-acrylic copolymer resin, a vinyl chloride resin, a vinyl chloride-acrylic copolymer resin, a fluoroolefin resin, a polyester urethane resin, a polyether polyurethane resin, a polycarbonate urethane resin, and a polyester resin.

In order to provide favorable abrasion resistance, the fine resin particles preferably include at least one selected from the group consisting of a polyethylene resin, an acrylic resin, a styrene-acrylic copolymer resin, a vinyl acetate resin, a vinyl acetate-acrylic copolymer resin, a vinyl chloride-acrylic copolymer resin, a polyester urethane resin, a polyether polyurethane resin, a polycarbonate urethane resin, and a polyester resin, more preferably at least one selected from the group consisting of a polyethylene resin, a styrene-acrylic copolymer resin, a polyester urethane resin, and a polyether polyurethane resin.

The fine resin particles may be composed of one type of resin, or may be composed of two or more types of resins.

The volume average particle size of the fine resin particles is, for example, preferably 10 to 1000 nm, more preferably 30 to 500 nm, still more preferably 50 to 300 nm.

The volume average particle size can be determined, for example, by using a particle size distribution measuring device.

The amount of the fine resin particles is 0.5 to 10% by mass in solid content based on the total mass of the aqueous inkjet ink.

When the amount of the fine resin particles is less than 0.5% by mass in solid content based on the total mass of the aqueous inkjet ink, the abrasion resistance becomes insufficient. When the amount of the fine resin particles is more than 10% by mass in solid content, the ejection performance and the continuous ejection stability become insufficient.

In order to provide favorable storage stability, the amount of the fine resin particles is preferably 1% by mass or more in solid content based on the total mass of the aqueous inkjet ink.

In order to provide favorable abrasion resistance, the amount of the fine resin particles is preferably 8% by mass or less, more preferably 5% by mass or less in solid content based on the total mass of the aqueous inkjet ink.

### (Surfactant)

The aqueous inkjet ink of the present invention contains, as the surfactant, a surfactant represented by the following formula (I): 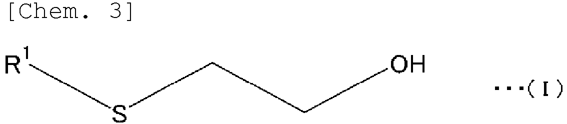 wherein R¹ is a C1-C15 linear or branched substituent containing at least one of a hydroxy group or an ether structure.

In order to provide favorable storage stability to the aqueous inkjet ink, R¹ in the formula (I) preferably contains a hydroxy group, more preferably a hydroxy group and an ether structure.

In order to favorably improve the storage stability and refillability of the aqueous inkjet ink, R¹ in the formula (I) preferably contains 2 to 11 carbon atoms, more preferably 4 to 11 carbon atoms.

Specific examples of the surfactant represented by the formula (I) include 2-{[2-hydroxy-3-(octyloxy)propyl]sulfanyl}ethan-1-ol, 2,2'-thiodiethanol, and 1-[(2-hydroxyethyl)thio]-2-propanol.

In order to favorably improve the storage stability and refillability of the aqueous inkjet ink, preferred among these is 2-{[2-hydroxy-3-(octyloxy)propyl]sulfanyl}ethan-1-ol.

The aqueous inkjet ink of the present invention contains the surfactant represented by the formula (I) in an amount of 0.01 to 1% by mass based on the total mass of the aqueous inkjet ink.

When the amount of the surfactant represented by the formula (I) is less than 0.01% by mass, the continuous ejection stability and the abrasion resistance are decreased. When the amount is more than 1% by mass, the storage stability, the ejection performance, the continuous ejection stability, and the abrasion resistance are decreased.

In order to provide favorable continuous ejection stability, the surfactant represented by the formula (I) is preferably present in an amount of 0.1% by mass or more based on the total mass of the aqueous inkjet ink. In order to provide favorable storage stability and favorable ejection performance, the amount is preferably 0.8% by mass or less, more preferably 0.6% by mass or less, still more preferably 0.5% by mass or less, based on the total mass of the aqueous inkjet ink.

In order to further improve the ejection performance, the aqueous inkjet ink of the present invention preferably further contains at least one of a nonionic surfactant or an anionic surfactant.

Examples of the nonionic surfactant include polyoxyethylene alkylphenyl ethers, polyoxyethylene alkyl esters, polyoxyethylene alkyl ethers, polyoxyethylene alkylamines, polyoxyethylene alkylamides, polyoxyethylene propylene block polymers, sorbitan fatty acid esters, polyoxyethylene sorbitan fatty acid esters, polyether siloxane copolymers, and adducts of ethylene oxide with acetylene alcohol.

Examples of the anionic surfactant include polyoxyethylene alkyl ether acetates, dodecylbenzenesulfonates, laurates, sodium sulfates, and salts of polyoxyethylene alkyl ether sulfates.

The amount of the at least one of a nonionic surfactant or an anionic surfactant is preferably 0.1 to 1% by mass.

The at least one of a nonionic surfactant or anionic surfactant may be used alone or in combination of two or more.

### (Water)

The aqueous inkjet ink of the present invention contains water.

In order to provide favorable ejection performance and favorable storage stability, the amount of water is preferably about 15 to 70% by mass based on the total mass of the aqueous inkjet ink.

### (Water-soluble solvent)

The aqueous inkjet ink of the present invention may contain a water-soluble solvent.

The water-soluble solvent is not limited, and examples thereof include monoalcohols, trihydric alcohols, dihydric alcohols, polyhydric alcohols having tetrahydric or higher hydric groups, lower alkyl ethers of polyhydric alcohols, ketones, ethers, esters, and nitrogen-containing compounds. These may be used alone or in combination of two or more.

In order to provide favorable ejection performance and favorable storage stability, the amount of the water-soluble solvent is preferably about 15 to 70% by mass based on the total mass of the aqueous inkjet ink.

### (Pigment dispersant)

The aqueous inkjet ink of the present invention may contain a pigment dispersant.

Examples of the pigment dispersant include carbodiimide dispersants, polyester amine dispersants, fatty acid amine dispersants, modified polyacrylate dispersants, modified polyurethane dispersants, multi-chain polymeric nonionic dispersants, and polymer ion activator.

These pigment dispersants may be used alone or in combination of two or more.

The pigment dispersant is more preferably a copolymer of styrene, an alkyl (meth)acrylate, and (meth)acrylic acid, still more preferably a copolymer of (meth)acrylic acid and stearyl (meth)acrylate or a copolymer of styrene and lauryl (meth)acrylate, particularly preferably a copolymer of (meth)acrylic acid, stearyl (meth)acrylate, and styrene.

The term "(meth)acrylate" refers to acrylate and/or methacrylate, and the term "(meth)acrylic acid" refers to acrylic acid and/or methacrylic acid.

The amount of the pigment dispersant is preferably 1 to 200 parts by mass, more preferably 5 to 100 parts by mass, based on 100 parts by mass of the pigment.

### (Other additives)

The aqueous inkjet ink of the present invention may contain various additives, such as ultraviolet absorbers, antioxidants, antifoaming agents, storage stability improvers, antifungal agents, rust inhibitors, thickeners, moisturizers, and pH adjusters, as necessary.

The amount of the additives is, for example, about 0 to 10% by mass in solid content based on the total mass of the aqueous inkjet ink.

### (Method for producing aqueous inkjet ink)

The aqueous inkjet ink of the present invention may be produced by any method. For example, the aforementioned components may be added in order or simultaneously, mixed, stirred, and kneaded.

When the aforementioned components are mixed and stirred in order, for example, the pigment dispersant may be first mixed with water or the water-soluble solvent to obtain an aqueous resin varnish. The aqueous resin varnish may then be mixed and stirred with the pigment to prepare an aqueous pigment ink base. Then, the aqueous pigment ink base may be mixed, stirred, and kneaded with the fine resin particles, the surfactant, and, if necessary, water or the water-soluble solvent to prepare the aqueous inkjet ink.

The mixing, stirring, and kneading may be performed by any method. For example, mixing, stirring, and kneading may be performed by a known method using, for example, a bead mill, a ready mill, an ultrasonic homogenizer, a highpressure homogenizer, a paint shaker, a ball mill, a roll mill, a sand mill, a sand grinder, a Dyno mill, a Dispermat, an SC Mill, or a Nanomizer.

### (Physical properties of aqueous inkjet ink)

The aqueous inkjet ink of the present invention preferably has excellent storage stability.

The storage stability can be evaluated by the following method.

The aqueous inkjet ink is placed in a glass bottle, and the viscosity thereof at 25°C is measured using a viscometer (RE100L, manufactured by Toki Sangyo Co., Ltd.).

Then, the glass bottle is sealed and stored at 60°C for one month, and the viscosity (25°C) after storage is measured using the above viscometer.

The storage stability is evaluated based on the rate of change in viscosity (60°C, (viscosity after one month - viscosity before storage)/viscosity before storage).

When the rate of change in viscosity is less than 10%, the storage stability can be rated as good. When the rate of change in viscosity is less than 5%, the storage stability can be rated as excellent.

The aqueous inkjet ink of the present invention is excellent in ejection performance.

The ejection performance can be evaluated by the following method.

A cartridge of an Epson printer PX105 is filled with the aqueous inkjet ink, and printing is performed to evaluate the ejection performance.

If there are some print defects but the ink can be successfully ejected, the ejection performance of the ink can be rated as good. If the ink can be ejected stably without any print defects, the ejection performance of the ink can be rated as excellent.

When the aqueous inkjet ink is black, cyan, magenta, or yellow, printing is performed on photo paper GL-101A450 (Canon Inc.). When the aqueous inkjet ink is white, printing is performed on light-shielding paper.

The aqueous inkjet ink of the present invention is excellent in continuous ejection stability.

The continuous ejection stability can be evaluated by the following method.

A cartridge of an Epson printer PX105 is filled with the aqueous inkjet ink, and 50 solid images of 15 cm × 20 cm are printed continuously to evaluate the continuous ejection stability.

If the image quality of the prints obtained by the above printing is good and the aqueous inkjet ink can be stably ejected, the continuous ejection stability of the ink can be rated as good.

When the aqueous inkjet ink is black, cyan, magenta, or yellow, printing is performed on photo paper GL-101A450 (Canon Inc.). When the aqueous inkjet ink is white, printing is performed on light-shielding paper.

The aqueous inkjet ink of the present invention is excellent in abrasion resistance.

The abrasion resistance can be evaluated by the following method.

The print obtained in the above evaluation of continuous ejection stability is dried in an oven at 80°C for three minutes. Then, the print surface is rubbed with a cotton swab to evaluate the abrasion resistance.

If rubbing the printed surface 10 times with a cotton swab only results in slight color transfer to the cotton swab and minor fading in the rubbed area, the abrasion resistance can be rated as good. If rubbing the printed surface 10 times with a cotton swab results in no fading in the rubbed area, the abrasion resistance can be rated as excellent.

### EXAMPLES

The present invention will be specifically described below using examples, but the present invention is not limited to these examples as long as it does not deviate from the spirit and scope of the present invention. In the following examples, unless otherwise specified, "parts" and "%" represent "parts by mass" and "% by mass", respectively.

### <Preparation of aqueous pigment ink base>

### (Aqueous resin varnish)

An acrylic acid/stearyl acrylate/styrene copolymer in an amount of 30 parts by mass was dissolved in a mixed solution of 3.8 parts by mass of potassium hydroxide and 66.2 parts by mass of water to prepare an aqueous resin varnish having a solid content of 30% by mass.

### (Aqueous black ink base)

To 32 parts by mass of the aqueous resin varnish was added 48 parts by mass of water, followed by mixing, whereby a resin varnish for pigment dispersion was prepared.

To the resin varnish for pigment dispersion was added 20 parts by mass of carbon black (product name: Printex 90, manufactured by Degussa), followed by stirring and mixing. The resulting mixture was then kneaded in a wet-type circulation mill to prepare an aqueous black ink base (pigment proportion = 20% by mass).

### (Aqueous cyan ink base)

To 32 parts by mass of the aqueous resin varnish was added 48 parts by mass of water, followed by mixing, whereby a resin varnish for pigment dispersion was prepared.

To the resin varnish for pigment dispersion was added 20 parts by mass of a cyan pigment (product name: Heliogen Blue L7101F, manufactured by BASF Corporation), followed by stirring and mixing. The resulting mixture was then kneaded in a wet-type circulation mill to prepare an aqueous cyan ink base (pigment proportion = 20% by mass).

### (Aqueous magenta ink base)

To 32 parts by mass of the aqueous resin varnish was added 48 parts by mass of water, followed by mixing, whereby a resin varnish for pigment dispersion was prepared.

To the resin varnish for pigment dispersion was added 20 parts by mass of a magenta pigment (product name: Ink Jet Magenta E5B02, manufactured by Clariant), followed by stirring and mixing. The resulting mixture was then kneaded in a wet-type circulation mill to prepare an aqueous magenta ink base (pigment proportion = 20% by mass).

### (Aqueous yellow ink base)

To 32 parts by mass of the aqueous resin varnish was added 48 parts by mass of water, followed by mixing, whereby a resin varnish for pigment dispersion was prepared.

To the resin varnish for pigment dispersion was added 20 parts by mass of a yellow pigment (product name: Novoperm Yellow 4G01, manufactured by Clariant), followed by stirring and mixing. The resulting mixture was then kneaded in a wet-type circulation mill to prepare an aqueous yellow ink base (pigment proportion = 20% by mass).

### (Aqueous white ink base)

To 32 parts by mass of the aqueous resin varnish was added 28 parts by mass of water, followed by mixing, whereby a resin varnish for pigment dispersion was prepared.

To the resin varnish for pigment dispersion was added 40 parts by mass of a titanium oxide pigment (product name: CR-90, manufactured by Ishihara Sangyo Kaisha, Ltd.), followed by stirring and mixing. The resulting mixture was then kneaded in a wet-type circulation mill to prepare an aqueous white ink base (pigment proportion = 40% by mass).

The materials used in the following examples and comparative examples are as follows.

### <Fine resin particles>

Fine polyethylene resin particles (product name: AQUACER 531, manufactured by BYK Corporation)
Fine acrylic resin particles (product name: Yodosol AD173, manufactured by Henkel)
Fine styrene-acrylic copolymer resin particles (product name: NeoCryl A-1092, manufactured by Covestro)
Fine vinyl acetate-acrylic copolymer resin particles (product name: Vinyblan 1245L, manufactured by Nissin Chemical Industry Co., Ltd.)
Fine vinyl chloride-acrylic copolymer resin particles (product name: Vinyblan 278, manufactured by Nissin Chemical Industry Co., Ltd.)
Fine vinyl acetate resin particles (product name: Vinyblan GV6181, manufactured by Nissin Chemical Industry Co., Ltd.)
Fine polyester polyurethane resin particles (product name: Superflex 740, manufactured by DKS Co., Ltd.)
Fine polyether polyurethane resin particles (product name: NeoRez R-966, manufactured by Covestro)
Fine Polycarbonate polyurethane resin particles (product name: Superflex 420NS, manufactured by DKS Co., Ltd.)
Fine polyester resin particles (product name: Sepolsion ES, manufactured by Sumitomo Seika Chemicals Company, Ltd.)

### <Surfactant>

### (Surfactants satisfying the formula (I))

2-{[2-Hydroxy-3-(octyloxy)propyl]sulfanyl}ethan-1-ol
2,2'-Thiodiethanol
1-[(2-Hydroxyethyl)thio]-2-propanol

### (Surfactants not satisfying the formula (I))

2-(Methylthio)ethanol
2-(Ethylthio)ethanol
2-(Isopropylthio)ethanol
2-(Isobutylthio)ethanol
2-(n-Propylthio)ethanol

### (Nonionic surfactant)

Nonionic surfactant A (product name: SURFYNOL 465, manufactured by Nissin Chemical Industry Co., Ltd.)
Nonionic surfactant B (product name: Emulgen 705, manufactured by Kao Corporation)
Nonionic surfactant C (product name: TEGO Glide 450, manufactured by Evonik)

### (Anionic surfactant)

Anionic surfactant (product name: Persoft EF, manufactured by ADEKA Corporation)

### <Water-soluble solvent>

Propylene Glycol
Glycerol

### <Water>

Purified water

### (Examples 1 to 25, Comparative Examples 1 to 8)

The materials were mixed and stirred in the amounts shown in Tables 1, 2, and 3 to prepare aqueous inkjet inks.

### <Storage stability>

The prepared aqueous inkjet ink was placed in a glass bottle, and the viscosity thereof at 25°C was measured using a viscometer (RE100L, manufactured by Toki Sangyo Co., Ltd.).

Then, the glass bottle was sealed and stored at 60°C for one month, and the viscosity (25°C) after storage was measured using the above viscometer.

The storage stability was evaluated according to the following criteria based on the rate of change in viscosity (60°C, (viscosity after one month - viscosity before storage)/viscosity before storage).

### (Evaluation Criteria)

∘∘ (Excellent): Rate of change in viscosity was less than 5%.
∘ (Good): Rate of change in viscosity was 5% or more and less than 10%.
× (Poor): Rate of change in viscosity was 10% or more.

### <Ejection performance>

A cartridge of an Epson printer PX105 was filled with the prepared aqueous inkjet ink, and printing was performed to evaluate the ejection performance according to the following evaluation criteria.

When the aqueous inkjet ink was black, cyan, magenta, or yellow, printing was performed on photo paper GL-101A450 (Canon Inc.). When the aqueous inkjet ink was white, printing was performed on light-shielding paper.

### (Evaluation Criteria)

∘∘ (Excellent): No print defects occurred and the ink was successfully ejected stably.
∘ (Good): Slight print defects occurred but the ink was successfully ejected.
× (Poor): Print defects occurred and the ink could not be ejected stably.

### <Continuous ejection stability>

A cartridge of an Epson printer PX105 was filled with the prepared aqueous inkjet ink, and 50 solid images of 15 cm × 20 cm were printed continuously to evaluate the continuous ejection stability according to the following evaluation criteria.

When the aqueous inkjet ink was black, cyan, magenta, or yellow, printing was performed on photo paper GL-101A450 (Canon Inc.). When the aqueous inkjet ink was white, printing was performed on light-shielding paper.

### (Evaluation Criteria)

o (Good): The image quality of the print obtained by printing was good, and the ink could be ejected stably.
× (Poor): Degradation of image quality such as streaks was observed in the print obtained by printing, and the ink could not be ejected stably.

### <Abrasion resistance>

The print obtained in the above evaluation of continuous ejection stability was dried in an oven at 80°C for three minutes. Then, the print surface was rubbed with a cotton swab to evaluate the abrasion resistance according to the following evaluation criteria.

### (Evaluation Criteria)

∘∘ (Excellent): Rubbing the printed surface 10 times with a cotton swab resulted in no fading.
∘ (Good): Rubbing the printed surface 10 times with a cotton swab resulted in color transfer to the cotton swab and minor fading in the rubbed area.
Δ (Fair): Rubbing the printed surface 10 times with a cotton swab resulted in partial peeling of the rubbed area.
× (Poor): Rubbing the printed surface 10 times with a cotton swab resulted in complete peeling of the rubbed area.

**[Table 1]**

| | | Example | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| Aqueous pigment ink base | Aqueous black ink base | 25,0 | - | - | - | - | 25,0 | 25,0 | 25,0 | 25,0 | 25,0 | 25,0 | 25,0 | 25,0 |
| | Aqueous cyan ink base | - | 15,0 | - | - | - | - | - | - | - | - | - | - | - |
| | Aqueous magenta ink base | - | - | 25,0 | - | - | - | - | - | - | - | - | - | - |
| | Aqueous yellow ink base | - | - | - | 25,0 | - | - | - | - | - | - | - | - | - |
| | Aqueous white ink base | - | - | - | - | 25,0 | - | - | - | - | - | - | - | - |
| Water-soluble solvent | Propylene glycol | 35,0 | 35,0 | 35,0 | 40,0 | 35,0 | - | 35,0 | 35,0 | 35,0 | 35,0 | 35,0 | 35,0 | 35,0 |
| | Glycerol | - | - | - | - | - | 28,0 | - | - | - | - | - | - | - |
| | Fine polyethylene resin particles | 1,0 | 1,0 | 1,0 | 1,0 | 1,0 | 1,0 | - | - | - | - | - | - | - |
| | Fine acrylic resin particles | - | - | - | - | - | - | 1,0 | - | - | - | - | - | - |
| | Fine styrene-acrylic copolymer resin particles | - | - | - | - | - | - | - | 1,0 | - | - | - | - | - |
| | Fine vinyl acetate-acrylic copolymer resin particles | - | - | - | - | - | - | - | - | 1,0 | - | - | - | - |
| Fine resin particles (solid content) | Fine vinyl chloride-acrylic copolymer resin particles | - | - | - | - | - | - | - | - | - | 1,0 | - | - | - |
| | Fine vinyl acetate resin particles | - | - | - | - | - | - | - | - | - | - | 1,0 | - | - |
| | Fine polyester urethane resin particles | - | - | - | - | - | - | - | - | - | - | - | 1,0 | - |
| | Fine polyether polyurethane resin particles | - | - | - | - | - | - | - | - | - | - | - | - | 1,0 |
| | Fine polycarbonate urethane resin particles | - | - | - | - | - | - | - | - | - | - | - | - | - |
| | Fine polyester resin particles | - | - | - | - | - | - | - | - | - | - | - | - | - |
| Surfactant | 2-{[2-Hydroxy-3-(octyloxy)propyl]sulfanyl}ethan-1-ol | 0,1 | 0,1 | 0,1 | 0,1 | 0,1 | 0,1 | 0,1 | 0,1 | 0,1 | 0,1 | 0,1 | 0,1 | 0,1 |
| | 2,2'-Thiodiethanol | - | - | - | - | - | - | - | - | - | - | - | - | - |
| | 1-[(2-hydroxyethyl)thio]-2-propanol | - | - | - | - | - | - | - | - | - | - | - | - | - |
| | Nonionic surfactant A | 0,5 | 0,5 | 0,5 | 0,5 | 0,5 | 0,5 | 0,5 | 0,5 | 0,5 | 0,5 | 0,5 | 0,5 | 0,5 |
| | Nonionic surfactant B | - | - | - | - | - | - | - | - | - | - | - | - | - |
| | Nonionic surfactant C | - | - | - | - | - | - | - | - | - | - | - | - | - |
| | Anionic surfactant | - | - | - | - | - | - | - | - | - | - | - | - | - |
| Water | | 38,4 | 48,4 | 38,4 | 33,4 | 38,4 | 45,4 | 38,4 | 38,4 | 38,4 | 38,4 | 38,4 | 38,4 | 38,4 |
| Total (% by mass) | | 100,0 | 100,0 | 100,0 | 100,0 | 100,0 | 100,0 | 100,0 | 100,0 | 100,0 | 100,0 | 100,0 | 100,0 | 100,0 |
| | | | | | | | | | | | | | | |
| Storage stability | | ○○ | ○○ | ○○ | ○○ | ○○ | ○○ | ○○ | ○○ | ○○ | ○○ | ○○ | ○○ | ○○ |
| Ejection performance | | ○○ | ○○ | ○○ | ○○ | ○○ | ○○ | ○○ | ○○ | ○○ | ○○ | ○○ | ○○ | ○○ |
| Continuous ejection stability | | ○ | ○ | ○ | ○ | ○ | ○ | ○ | ○ | ○ | ○ | ○ | ○ | ○ |
| Abrasion resistance | | ○○ | ○○ | ○○ | ○○ | ○○ | ○○ | ○ | ○○ | ○ | ○ | ○ | ○○ | ○○ |

**[Table 2]**

| | | | Example | | | | | | | | | | | |
|---|---|---|---|---|---|---|---|---|---|---|---|---|---|---|
| | | | 14 | 15 | 16 | 17 | 18 | 19 | 20 | 21 | 22 | 23 | 24 | 25 |
| Aqueous pigment ink base | | Aqueous black ink base | 25,0 | 25,0 | 25,0 | 25,0 | 25,0 | 25,0 | 25,0 | 25,0 | 25,0 | 25,0 | 25,0 | 25,0 |
| | | Aqueous cyan ink base | - | - | - | - | - | - | - | - | - | - | - | - |
| | | Aqueous magenta ink base | - | - | - | - | - | - | - | - | - | - | - | - |
| | | Aqueous yellow ink base | - | - | - | - | - | - | - | - | - | - | - | - |
| | | Aqueous white ink base | - | - | - | - | - | - | - | - | - | - | - | - |
| Water-soluble solvent | | Propylene glycol | 35,0 | 35,0 | 35,0 | 35,0 | 35,0 | 35,0 | 35,0 | 35,0 | 35,0 | 35,0 | 35,0 | 35,0 |
| | | Glycerol | - | - | - | - | - | - | - | - | - | - | - | - |
| | Fine polyethylene resin particles | | - | - | 0,5 | 10, 0 | 1,0 | 1,0 | 1,0 | 1,0 | 1,0 | 1,0 | 1,0 | 1,0 |
| | Fine acrylic resin particles | | - | - | - | - | 1,0 | - | - | - | - | - | - | - |
| | Fine styrene-acrylic copolymer resin particles | | - | - | - | - | - | - | - | - | - | - | - | - |
| | Fine vinyl acetate-acrylic copolymer resin particles | | - | - | - | - | - | - | - | - | - | - | - | - |
| Resin fine particles (solid content) | Fine vinyl chloride-acrylic copolymer resin particles | | - | - | - | - | - | - | - | - | - | - | - | - |
| | Fine vinyl acetate resin particles | | - | - | - | - | - | - | - | - | - | - | - | - |
| | Fine polyester urethane resin particles | | - | - | - | - | - | - | - | - | - | - | - | - |
| | Fine polyether polyurethane resin particles | | - | - | - | - | - | - | - | - | - | - | - | - |
| | Fine polycarbonate urethane resin particles | | 1,0 | - | - | - | - | - | - | - | - | - | - | - |
| | Fine polyester resin particles | | - | 1,0 | - | - | - | - | - | - | - | - | - | - |
| Surfactant | 2-{[2-Hydroxy-3-(octyloxy)propyl]sulfanyl}ethan-1-ol | | 0,1 | 0,1 | 0,1 | 0,1 | 0,1 | - | - | 1,0 | 0,1 | 0,1 | 0,1 | 0,1 |
| | 2,2'-Thiodiethanol | | - | - | - | - | - | 0,1 | - | - | 0,1 | - | - | - |
| | 1-[(2-hydroxyethyl)thio]-2-propanol | | - | - | - | - | - | - | 0,1 | - | - | - | - | - |
| | Nonionic surfactant A | | 0,5 | 0,5 | 0,5 | 0,5 | 0,5 | 0,5 | 0,5 | 0,5 | 0,5 | - | - | - |
| | Nonionic surfactant B | | - | - | - | - | - | - | - | - | - | 0,1 | - | - |
| | Nonionic surfactant C | | - | - | - | - | - | - | - | - | - | - | 0,5 | - |
| | Anionic surfactant | | - | - | - | - | - | - | - | - | - | - | - | 0,4 |
| Water | | | 38,4 | 38,4 | 38,9 | 29,4 | 37,4 | 38,4 | 38,4 | 37,5 | 38,3 | 38,8 | 38,4 | 38,5 |
| Total (% by mass) | | | 100,0 | 100,0 | 100,0 | 100,0 | 100,0 | 100,0 | 100,0 | 100,0 | 100,0 | 100,0 | 100,0 | 100,0 |
| | | | | | | | | | | | | | | |
| Storage stability | | | ○○ | ○○ | ○○ | ○ | ○○ | ○○ | ○○ | ○ | ○○ | ○○ | ○○ | ○○ |
| Ejection performance | | | ○○ | ○○ | ○○ | ○○ | ○○ | ○ | ○ | ○ | ○○ | ○○ | ○○ | ○○ |
| Continuous ejection stability | | | ○ | ○ | ○ | ○ | ○ | ○ | ○ | ○ | ○ | ○ | ○ | ○ |
| Abrasion resistance | | | ○ | ○ | ○ | ○○ | ○○ | ○○ | ○○ | ○○ | ○○ | ○○ | ○○ | ○○ |

**[Table 3]**

| | | Comparative Example | | | | | | | | |
|---|---|---|---|---|---|---|---|---|---|---|
| | | 1 | 2 | 2 | 3 | 4 | 5 | 6 | 7 | 8 |
| Aqueous pigment ink base | Aqueous black ink base | 25,0 | 25,0 | 25,0 | 25,0 | 25,0 | 25,0 | 25,0 | 25,0 | 25,0 |
| Water-soluble solvent | Propylene glycol | 35,0 | 25,0 | 35,0 | 35,0 | 35,0 | 35,0 | 35,0 | 35,0 | 35,0 |
| | Glycerol | - | - | - | - | - | - | - | - | - |
| Resin fine particles (solid content) | Fine polyethylene resin particles | - | 15,0 | 1,0 | 1,0 | 1,0 | 1,0 | 1,0 | 1,0 | 1,0 |
| Surfactant | 2-{[2-Hydroxy-3-(octyloxy)propyl]sulfanyl}ethan-1-ol | 0,1 | 0,1 | - | 3,0 | - | - | - | - | - |
| | 2-(Methylthio)ethanol | - | - | - | - | 0,1 | - | - | - | - |
| | 2-(Ethylthio)ethanol | - | - | - | - | - | 0,1 | - | - | - |
| | 2-(Isopropylthio)ethanol | - | - | - | - | - | - | 0,1 | - | - |
| | 2-(Isobutylthio)ethanol | - | - | - | - | - | - | - | 0,1 | - |
| | 2-(n-Propylthio)ethanol | - | - | - | - | - | - | - | - | 0,1 |
| | Nonionic surfactant A | 0,5 | 0,5 | 0,5 | 0,5 | 0,5 | 0,5 | 0,5 | 0,5 | 0,5 |
| Water | | 39,4 | 34,4 | 38,5 | 35,5 | 38,4 | 38,4 | 38,4 | 38,4 | 38,4 |
| Total (% by mass) | | 100,0 | 100,0 | 100,0 | 100,0 | 100,0 | 100,0 | 100,0 | 100,0 | 100,0 |
| | | | | | | | | | | |
| Storage stability | | ○○ | × | ○○ | ○ | ○○ | ○○ | ○○ | ○○ | ○○ |
| Ejection performance | | ○○ | × | ○○ | × | ○○ | ○○ | ○○ | ○○ | ○○ |
| Continuous ejection stability | | ○ | × | × | × | × | × | × | × | × |
| Abrasion resistance | | × | - | - | - | - | - | - | - | - |

The examples show that, in an aqueous inkjet ink containing a pigment, fine resin particles, a surfactant, and water, adjusting the amount of the fine resin particles within a specific range and using a particular surfactant enables formation of a coating excellent in storage stability, ejection performance, continuous ejection stability, and abrasion resistance.

In particular, in the examples in which 2-{[2-hydroxy-3-(octyloxy)propyl]sulfanyl}ethan-1-ol was used as the surfactant represented by the formula (I), the ejection performance was extremely excellent.

In the examples in which fine polyethylene resin particles, fine styrene-acrylic copolymer resin particles, fine polyester urethane resin particles, or fine polyether polyurethane resin particles were used as the fine resin particles, the abrasion resistance was extremely excellent.

In contrast, in the comparative examples, a coating excellent in all of the ejection performance, the continuous ejection stability, and the abrasion resistance could not be formed.

In Comparative Examples 2 to 8, since no prints could be obtained in the evaluation of continuous ejection stability, the evaluation of abrasion resistance could not be performed (represented by "-" in Table 3).

The present description discloses the following.

The present disclosure (1) relates to an aqueous inkjet ink containing: a pigment; fine resin particles; a surfactant; and water, the fine resin particles being contained in an amount of 0.5 to 10% by mass in solid content based on a total mass of the aqueous inkjet ink, the aqueous inkjet ink containing, as the surfactant, a surfactant represented by the following formula (I) in an amount of 0.01 to 1% by mass based on the total mass of the aqueous inkjet ink: 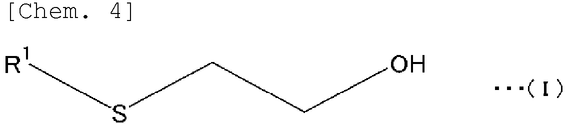 wherein R¹ is a C1-C15 linear or branched substituent containing at least one of a hydroxy group or an ether structure.

The present disclosure (2) relates to the aqueous inkjet ink according to the present disclosure (1), wherein R¹ in the formula (I) contains a hydroxy group.

The present disclosure (3) relates to the aqueous inkjet ink according to the present disclosure (1) or (2), wherein R¹ in the formula (I) contains a hydroxy group and an ether structure.

The present disclosure (4) relates to the aqueous inkjet ink according to any one of the present disclosures (1) to (3), wherein R¹ in the formula (I) contains 2 to 11 carbon atoms.

The present disclosure (5) relates to the aqueous inkjet ink according to any one of the present disclosures (1) to (4), further containing at least one of a nonionic surfactant or an anionic surfactant as the surfactant.

The present disclosure (6) relates to the aqueous inkjet ink according to any one of the present disclosures (1) to (5), wherein the surfactant represented by the formula (I) is contained in an amount of 0.1 to 0.5% by mass based on the total mass of the aqueous inkjet ink.

The present disclosure (7) relates to the aqueous inkjet ink according to any one of the present disclosures (1) to (6), wherein the fine resin particles include at least one selected from the group consisting of a polyethylene resin, an acrylic resin, a styrene-acrylic copolymer resin, a vinyl acetate-acrylic copolymer resin, a vinyl chloride-acrylic copolymer resin, a vinyl acetate resin, a polyester urethane resin, a polyether polyurethane resin, a polycarbonate urethane resin, and a polyester resin.

The present disclosure (8) relates to the aqueous inkjet ink according to any one of the present disclosures (1) to (7), wherein the fine resin particles are contained in an amount of 1 to 5% by mass in solid content based on the total mass of the aqueous inkjet ink.

### INDUSTRIAL APPLICABILITY

The present invention can provide an aqueous inkjet ink The present invention can provide an aqueous inkjet ink excellent in ejection performance and continuous ejection stability and capable of forming a coating excellent in abrasion resistance.

## Claims

1. An aqueous inkjet ink comprising:
a pigment;
fine resin particles;
a surfactant; and
water,
the fine resin particles being contained in an amount of 0.5 to 10% by mass in solid content based on a total mass of the aqueous inkjet ink,
the aqueous inkjet ink comprising, as the surfactant, a surfactant represented by the following formula (I) in an amount of 0.01 to 1% by mass based on the total mass of the aqueous inkjet ink: 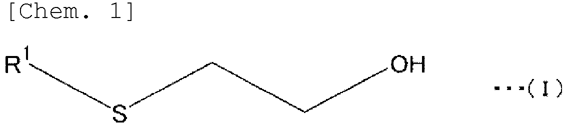
wherein R¹ is a C1-C15 linear or branched substituent containing at least one of a hydroxy group or an ether structure.

2. The aqueous inkjet ink according to claim 1,
wherein R¹ in the formula (I) contains a hydroxy group.

3. The aqueous inkjet ink according to claim 1 or 2,
wherein R¹ in the formula (I) contains a hydroxy group and an ether structure.

4. The aqueous inkjet ink according to claim 1 or 2,
wherein R¹ in the formula (I) contains 2 to 11 carbon atoms.

5. The aqueous inkjet ink according to claim 1 or 2, further comprising at least one of a nonionic surfactant or an anionic surfactant as the surfactant.

6. The aqueous inkjet ink according to claim 1 or 2,
wherein the surfactant represented by the formula (I) is contained in an amount of 0.1 to 0.5% by mass based on the total mass of the aqueous inkjet ink.

7. The aqueous inkjet ink according to claim 1 or 2,
wherein the fine resin particles include at least one selected from the group consisting of a polyethylene resin, an acrylic resin, a styrene-acrylic copolymer resin, a vinyl acetate-acrylic copolymer resin, a vinyl chloride-acrylic copolymer resin, a vinyl acetate resin, a polyester urethane resin, a polyether polyurethane resin, a polycarbonate urethane resin, and a polyester resin.

8. The aqueous inkjet ink according to claim 1 or 2,
wherein the fine resin particles are contained in an amount of 1 to 5% by mass in solid content based on the total mass of the aqueous inkjet ink.
